# EUROPEAN PATENT APPLICATION

(11) **EP 3 312 228 A1**
(43) Date of publication of application: **25.04.2018**
(21) Application number: 16811487.4
(22) Date of filing: 07.06.2016
(51) Int. Cl.: C08L 7/00, C08K 3/04, C08K 3/36, C08K 5/548, C08L 9/00, F16F 15/08

(54) **VIBRATION-DAMPING RUBBER COMPOSITION AND VIBRATION-DAMPING RUBBER**

(30) Priority: 18.06.2015 JP 2015122958
(71) Applicant: Bridgestone Corporation, Tokyo 104-8340 (JP)
(72) Inventor: NAGATA, Takeshi, Tokyo 104-8340 (JP)
(74) Representative: Oxley, Robin John George
(86) International application number: PCT/JP2016/066840
(87) International publication number: WO 2016/204012

(57) **Abstract**

Provided is an anti-vibration rubber composition comprising a diene rubber, a silane coupling agent having at least one of a structural unit represented by general formula (1) and a structural unit represented by general formula (2), carbon black, and silica, at a blending ratio of carbon black (a) to silica (b), i.e. (a)/(b), of 10/90 to 45/55 (mass ratio). The anti-vibration rubber composition can be vulcanized in a shortened time while maintaining easy workability in vulcanization and gives an anti-vibration rubber excellent in durability. R¹ represents a hydrocarbon group having 1 to 12 carbon atoms, L¹ and L² each independently represent a divalent hydrocarbon group having 1 to 5 carbon atoms, R² and R⁴ each independently represent a divalent hydrocarbon group having 1 to 5 carbon atoms, R³ and R⁵ each independently represent a hydrocarbon group having 1 to 5 carbon atoms, and x and y each independently represent an integer of 1 or more.

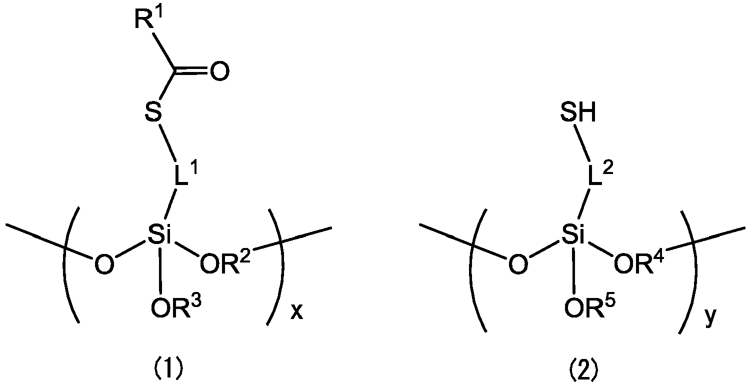

## Description

### Technical Field

The present invention relates to an anti-vibration rubber composition and an anti-vibration rubber.

### Background Art

A torsional damper, an engine mount, a muffler hanger and the like have been conventionally used in various vehicles including automobiles for purposes of preventing noise by absorbing vibration occurring in driving an engine, and an anti-vibration rubber has been used as the material for such a component. An anti-vibration rubber used for such purposes is required to have excellent fatigue durability in addition to good heat resistance, good ozone resistance and a low dynamic magnification.

For example, in order to obtain an anti-vibration rubber composition having both of a low dynamic magnification and high durability, and an anti-vibration rubber made by curing the rubber composition, PTL1 discloses an anti-vibration rubber composition containing a diene rubber with carbon black and silica as a filler, at a blending ratio of carbon black (a) to silica (b), i.e. (a)/(b), of 80/20 to 20/80 (mass ratio).

As silane coupling agents for use in a rubber composition, compounds having various structures are used in a variety of applications.

For example, PTL2 discloses that inclusion of silica, aluminum hydroxide, and a silane coupling agent having a specific structure and/or a silane coupling agent represented by a specific formula, which is different from the former one, in a rubber composition for tires allows both of the initial wet gripping performance and the abrasion resistance (preservation of wet gripping performance) to be achieved in parallel.

Also, for example, PTL3 discloses that a tire with improved fuel efficiency, wet gripping performance, abrasion resistance, and steering stability in a well-balanced manner can be obtained from a rubber composition for use in manufacturing pneumatic tires containing a rubber component, silica (1) having a nitrogen adsorption specific surface area of 100 m²/g or less, and silica (2) having a nitrogen adsorption specific surface area of 180 m²/g or more, with a content of a conjugated diene polymer having a structural unit based on the conjugated diene and an N-containing vinylsilane unit, of which at least one end is modified by a compound having a specifically structured group, of 5 mass% or more in 100 mass% of the rubber component, and with a total content of the silica (1) and (2) of 30 to 150 parts by mass in 100 parts by mass of the rubber component.

### Citation List

### Patent Literature

PTL1: JP 2011-105870A
PTL2: JP 2011-148952A
PTL3: JP 2012-229278A

### Summary of Invention

### Technical Problem

Inclusion of silica in a rubber composition results in a prolonged vulcanizing time, so that production efficiency tends to be reduced. On the other hand, a shortened vulcanizing time of the rubber composition for increase in production efficiency of an anti-vibration rubber causes reduction in workability in processing of rubber in some cases.

An object of the present invention is to provide an anti-vibration rubber composition which can be vulcanized in a shortened time while maintaining easy workability in vulcanization and gives an anti-vibration rubber excellent in durability, and to provide an anti-vibration rubber excellent in durability by curing the rubber composition.

### Solution to Problem

The present inventors have found that an anti-vibration rubber composition that can be vulcanized in a shortened time while maintaining easy workability in vulcanization and gives an anti-vibration rubber excellent in durability can be obtained by blending a silane coupling agent having a specific structure into a system containing a diene rubber and carbon black and silica in a specific blending ratio, and thus, the present invention was accomplished.

Specifically, the present invention is constituted as follows:
<1> An anti-vibration rubber composition, comprising: a diene rubber, a silane coupling agent having at least one of a structural unit represented by the following general formula (1) and a structural unit represented by the following general formula (2), carbon black and silica at a blending ratio of the carbon black (a) to the silica (b), i.e. (a)/(b), of 10/90 to 45/55 (mass ratio): 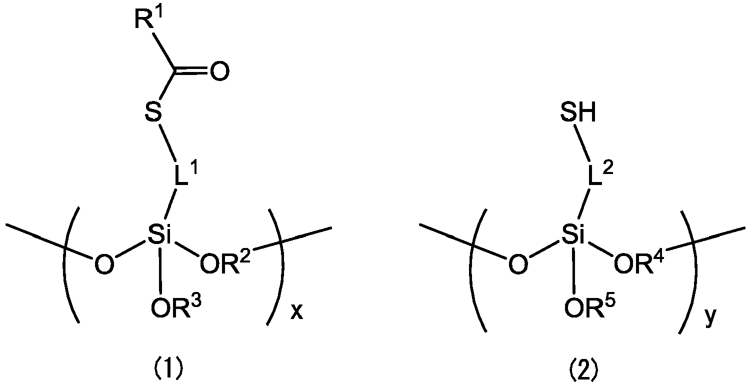 wherein R¹ represents a hydrocarbon group having 1 to 12 carbon atoms, L¹ and L² each independently represent a divalent hydrocarbon group having 1 to 5 carbon atoms, R² and R⁴ each independently represent a divalent hydrocarbon group having 1 to 5 carbon atoms, R³ and R⁵ each independently represent a hydrocarbon group having 1 to 5 carbon atoms, and x and y each independently represent an integer of 1 or more.
<2> The anti-vibration rubber composition according to item <1>, wherein the carbon black is at least one selected from the group consisting of SRF, GPF, FEF, HAF, ISAF, SAF, FT and MT.
<3> The anti-vibration rubber composition according to item <1> or <2>, wherein the diene rubber comprises a natural rubber alone.
<4> The anti-vibration rubber composition according to item <1> or <2>, wherein the diene rubber comprises a natural rubber and a butadiene rubber in combination.
<5> An anti-vibration rubber made by curing the anti-vibration rubber compositions according to any one of the items <1> to <4>.

### Advantageous Effects of Invention

According to the present invention, an anti-vibration rubber composition that can be vulcanized in a shortened time while maintaining easy workability in vulcanization and gives an anti-vibration rubber excellent in durability, and an anti-vibration rubber excellent in durability can be provided.

### Brief Description of Drawing

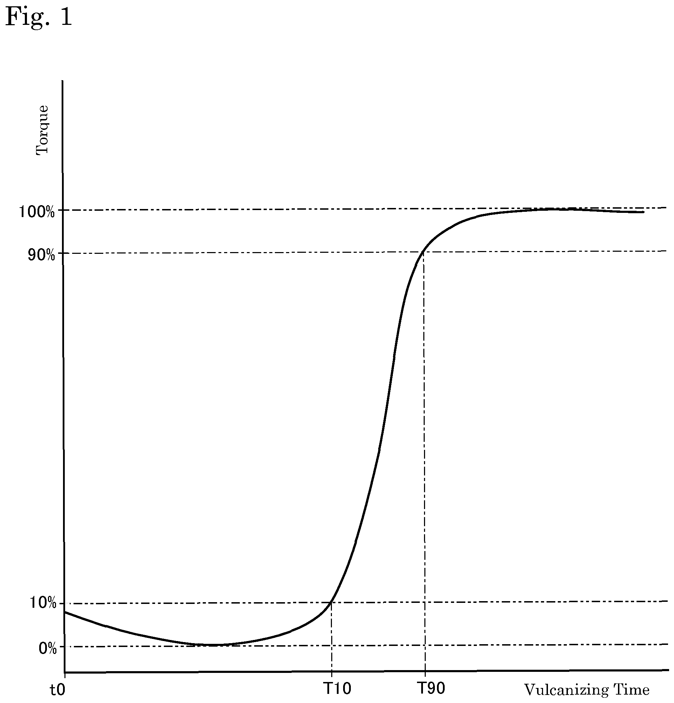

[Fig. 1] Fig. 1 is a chart illustrating an example of the relations between vulcanizing time and torque of a rubber composition of the present invention.

### Description of Embodiment

### <Anti-Vibration Rubber Composition>

An anti-vibration rubber composition of the present invention comprises: a diene rubber, a silane coupling agent having at least one of a structural unit represented by the following general formula (1) and a structural unit represented by the following general formula (2) (hereinafter referred to as "specific silane coupling agent" in some cases), and carbon black and silica at a specific blending ratio. 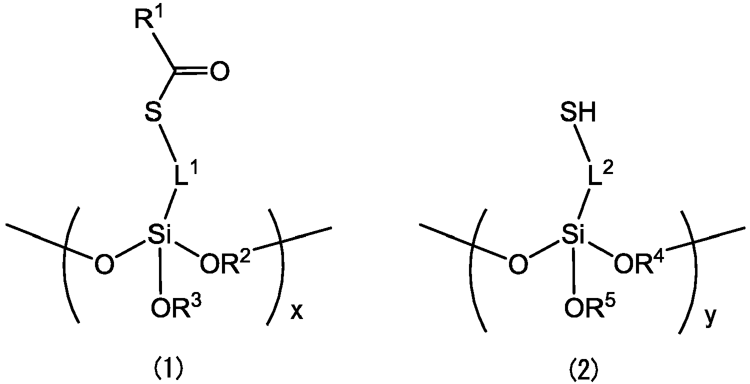 wherein R¹ represents a hydrocarbon group having 1 to 12 carbon atoms, L¹ and L² each independently represent a divalent hydrocarbon group having 1 to 5 carbon atoms, R² and R⁴ each independently represent a divalent hydrocarbon group having 1 to 5 carbon atoms, R³ and R⁵ each independently represent a hydrocarbon group having 1 to 5 carbon atoms, and x and y each independently represent an integer of 1 or more.

Although it is unclear why the anti-vibration rubber composition of the present invention can be vulcanized in a shortened time while maintaining easy workability in vulcanization and gives an anti-vibration rubber excellent in durability by including the specific silane coupling agent together with a diene rubber and carbon black and silica in a specific blending ratio, the following reason can be supposed.

An anti-vibration rubber composition containing silica and a typical conventional silane coupling agent tends to have a delayed vulcanizing time of the anti-vibration rubber composition due to inhibitory action to vulcanization. The anti-vibration composition is, therefore, difficult to be cured, so that the production efficiency of the anti-vibration rubber tends to be reduced.

In contrast thereto, it is presumed that the anti-vibration rubber composition of the present invention functions as follows due to the inclusion of a specific silane coupling agent and carbon black and silica in a specific blending ratio.
1) The inhibitory action to vulcanization is reduced, though the time until initiation of vulcanization is almost unchanged. 2) The reactivity between rubber and silica in a coupling reaction is improved. 3) Silica and carbon black are easily separated due to different polarities, so that inclusion of carbon black together with silica results in better dispersion from each other, with the dispersion state of silica being improved.

It is presumed that due to 1) to 3) described above, and a multiple function of 1) to 3), the anti-vibration rubber composition of the present invention can be vulcanized in a shortened time while maintaining easy workability in vulcanization and gives an anti-vibration rubber excellent in durability.

With reference to a drawing, the vulcanization properties of the anti-vibration rubber composition of the present invention will be described.

Fig. 1 is a chart illustrating an example of the relations between vulcanizing time and torque of a rubber composition of the present invention. The graph in Fig. 1 shows a curve with vulcanizing time taken on the horizontal axis and torque taken on the vertical axis. Between the lowest value (0%) and the highest value (100%) of the torque of an anti-vibration rubber composition, the vulcanizing time from the initiation of vulcanization of the anti-vibration rubber composition until the torque of the anti-vibration rubber composition reaches 10% is represented by T10, and the vulcanizing time until the torque of the anti-vibration rubber composition reaches 90% is represented by T90. Also, the vulcanizing time at the initiation of vulcanization of the anti-vibration rubber composition is represented by t0.

In general, when the time from t0 to T90 is short, the vulcanizing time is short, resulting in an improved production efficiency of an anti-vibration rubber. The workability after vulcanization of an anti-vibration rubber composition depends on how long the torque of the anti-vibration rubber composition can be kept small. Conventionally, when the vulcanizing time is shortened, the time between T90 and T10 "T90-T10" in which curing of the anti-vibration rubber composition proceeds is shortened and the time from t0 to T10 also tends to be shortened.

The anti-vibration rubber composition of the present invention allows T90-T10 to be shortened while keeping T10-t0 longer, so that vulcanizing time can be shortened without reduction in workability.

The anti-vibration rubber composition and the anti-vibration rubber of the present invention are described in detail as follows.

### [Diene Rubber]

The anti-vibration rubber composition of the present invention contains a diene rubber.

As the diene rubber, a known one can be used without particular limitations, and examples thereof include a natural rubber (NR); a diene synthetic rubber such as a butadiene rubber (BR), a styrene-butadiene rubber (SBR), an isoprene rubber, a styrene-isoprene copolymer, a chloroprene rubber, an acrylonitrile-butadiene rubber, and an acrylate butadiene rubber; and a natural rubber or a diene synthetic rubber having a modified molecular chain terminal such as an epoxidized natural rubber. Moreover, a butadiene rubber (BR) is a homopolymer, different from a copolymer such as styrene-butadiene rubber (SBR) and an acrylonitrile-butadiene rubber (NBR).

The anti-vibration rubber composition of the present invention comprises a single or two or more kinds of the diene rubber described above.

The anti-vibration rubber composition of the present invention comprises, among the diene rubbers, preferably at least one selected from the group consisting of a natural rubber, a butadiene rubber, and a styrene-butadiene rubber, and more preferably at least a natural rubber. For example, the anti-vibration rubber composition of the present invention may comprise a natural rubber alone or a natural rubber and a butadiene rubber.

An anti-vibration rubber composition of the present invention may comprise a rubber another rubber) other than a diene rubber. From the viewpoint of not spoiling the effects of the present invention, the diene rubber content in the total of the diene rubber and the other rubber is preferably 80 mass% or more, more preferably 90 mass% or more, still more preferably 95 mass% or more, particularly preferably 100 mass%, relative to the total mass of rubber.

Furthermore, it is preferred that the diene rubber comprises a natural rubber as main component. More specifically, the content of a natural rubber is preferably more than 50 mass%, more preferably 80 mass% or more in the diene rubber.

Examples of the other rubber include an acryl rubber, an ethylenepropylene rubber (EPR and EPDM), a fluorine rubber, a silicone rubber, a urethane rubber, and a butyl rubber, and these may be used singly or in combinations of two or more.

From the viewpoint of not spoiling the effects of the present invention, the content of the other rubber in the whole rubber is preferably 20 mass% or less, more preferably 10 mass% or less, still more preferably 5 mass% or less, particularly preferably 0 mass%, relative to the total mass of rubber.

### [Silane Coupling Agent]

The anti-vibration rubber composition of the present invention contains a silane coupling agent having at least one of a structural unit represented by the following general formula (1) and a structural unit represented by the following general formula (2) (specific silane coupling agent). By containing the specific silane coupling agent together with a diene rubber and carbon black and silica in a specific blending ratio, the anti-vibration rubber composition of the present invention can be vulcanized in a shortened time while maintaining easy workability of the anti-vibration rubber composition and can improve the durability of an anti-vibration rubber. 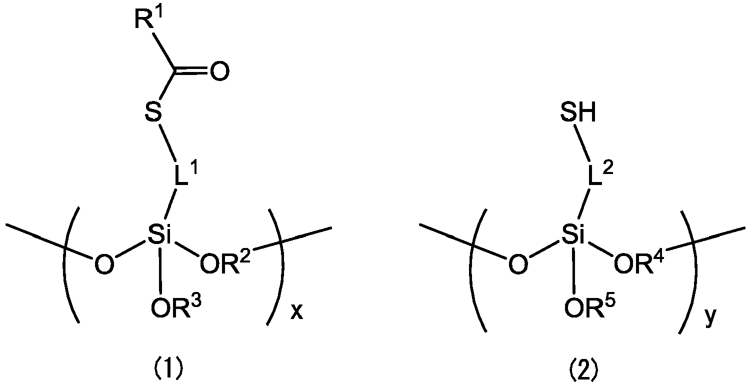 wherein R¹ represents a hydrocarbon group having 1 to 12 carbon atoms, L¹ and L² each independently represent a divalent hydrocarbon group having 1 to 5 carbon atoms, R² and R⁴ each independently represent a divalent hydrocarbon group having 1 to 5 carbon atoms, R³ and R⁵ each independently represent a hydrocarbon group having 1 to 5 carbon atoms, and x and y each independently represent an integer of 1 or more.

The hydrocarbon group having 1 to 12 carbon atoms represented by R¹ is preferably a saturated aliphatic hydrocarbon group having 1 to 12 carbon atoms or an unsaturated aliphatic hydrocarbon group having 2 to 12 carbon atoms.

The saturated aliphatic hydrocarbon group may be any of linear, branched, and cyclic ones. A linear or branched one is preferred, and a linear one is more preferred. The number of carbons in the saturated aliphatic hydrocarbon group is preferably 3 to 10, more preferably 5 to 8. Examples of the saturated aliphatic hydrocarbon group having 1 to 12 carbon atoms include a methyl group, an ethyl group, a propyl group, a butyl group, a hexyl group, a heptyl group, an octyl group, a nonyl group, a decyl group, and a dodecyl group.

The unsaturated aliphatic hydrocarbon group may be any of linear, branched, and cyclic ones. A linear or branched one is preferred, and a linear one is more preferred. The number of carbon atoms in the unsaturated aliphatic hydrocarbon group is preferably 3 to 10, more preferably 5 to 8. Examples of the unsaturated aliphatic hydrocarbon group having 2 to 12 carbon atoms include a vinyl group, a butenyl group, a hexenyl group, a heptenyl group, an octenyl group, a nonenyl group, a decenyl group, and a dodecenyl group.

Examples of the divalent hydrocarbon group having 1 to 5 carbon atoms represented by L¹ and L² include a hydrocarbon group formed by removing a hydrogen atom from a saturated aliphatic hydrocarbon group with R¹ having 1 to 5 carbon atoms, and a hydrocarbon group formed by removing a hydrogen atom from an unsaturated aliphatic hydrocarbon group with R¹ having 2 to 5 carbon atoms. Examples of the saturated aliphatic hydrocarbon groups and unsaturated aliphatic hydrocarbon groups are as described above.

Preferably, L¹ and L² each independently are divalent linear saturated aliphatic hydrocarbon groups having 2 to 4 carbon atoms.

Examples of the hydrocarbon group having 1 to 5 carbon atoms represented by R³ and R⁵ include a saturated aliphatic hydrocarbon group with R¹ having 1 to 5 carbon atoms, and an unsaturated aliphatic hydrocarbon group with R¹ having 2 to 5 carbon atoms. Examples of the saturated aliphatic hydrocarbon groups and the unsaturated aliphatic hydrocarbon groups are as described above. Examples of the divalent hydrocarbon group having 1 to 5 carbon atoms represented by R² and R⁴ include a divalent hydrocarbon group formed by removing one hydrogen atom from a hydrocarbon group having 1 to 5 carbon atoms represented by R³ and R⁵.

Preferably, R³ and R⁵ each independently are linear saturated aliphatic hydrocarbon groups having 1 to 4 carbon atoms, more preferably a linear saturated aliphatic hydrocarbon groups having 2 to 3 carbon atoms. Preferably, R² and R⁴ are each independently linear divalent saturated aliphatic hydrocarbon groups having 1 to 4 carbon atoms, more preferably linear divalent saturated aliphatic hydrocarbon groups having 2 to 3 carbon atoms.

The anti-vibration rubber composition of the present invention may comprise one or more specific silane coupling agents.

In the formulas, x and y each independently represent an integer of 1 or more, and the molar ratio (x/y) is preferably 40/60 to 80/20, more preferably 51/49 to 70/30, still more preferably 53/47 to 60/40.

Further, the specific silane coupling agent only needs to have at least one of a structural unit represented by general formula (1) and a structural unit represented by general formula (2), and, for example, may have a structural unit represented by general formula (2) alone.

The anti-vibration rubber composition of the present invention may further comprise one or more silane coupling agents other than the specific silane coupling agent. From the viewpoint of not spoiling the effects of the present invention, the content of the other silane coupling agents is preferably 20 mass% or less, more preferably 10 mass% or less, relative to the sum of the specific silane coupling agent and the other silane coupling agents.

Still more preferably, the anti-vibration rubber composition of the present invention comprises no other silane coupling agents (content: 0 mass%).

The content of the specific silane coupling agent is 1 to 15 parts by mass, preferably 1 to 10 parts by mass, more preferably 5 to 9 parts by mass, relative to 100 parts by mass of silica blended. With the content being 1 part by mass or more, silica is easily dispersed in the rubber composition, so that the reinforcement of the rubber composition can be enhanced. In general, an anti-vibration rubber composition comprises silica, of which dispersibility is enhanced by a silane coupling agent, so that the durability of an anti-vibration rubber can be improved. Use of a large amount of silane coupling agent to enhance the dispersibility of silica, however, accelerates the vulcanization rate, so that the time until initiation of the vulcanization of the rubber composition is brought forward. Accordingly, a large amount of silane coupling agent has not been used. In contrast, the specific silane coupling agent hardly affects the time until initiation of vulcanization, so that the workability is hardly reduced. As a result, a larger amount of silane coupling agent can be used than before, so that the dispersibility of silica in the rubber composition can be enhanced.

Even with a content of larger than 15 parts by mass, an effect suitably corresponding to the content cannot be attained in some cases, and hence the content is preferably 15 parts by mass or less from industrial and economical viewpoints.

### [Carbon Black]

The anti-vibration rubber composition of the present invention contains carbon black.

Carbon black functions as a reinforcement filler for an anti-vibration rubber composition and can enhance the elastic modulus and the damping property.

The iodine adsorption number of carbon black is preferably 140 g/kg or less, more preferably 120 g/kg or less, from the viewpoints of workability and the durability.

The type of carbon black is not particularly limited and examples thereof include SRF, GPF, FEF, HAF, ISAF, SAF, FT and MT. In particular, SRF, GPF, FEF, HAF, ISAF, FT and MT are preferred, and SRF, GPF, FEF, HAF, FT and MT are more preferred. These carbon blacks may be used singly or in combinations of two or more.

The amount of carbon black blended is not particularly limited as long as the amount is in a range that does not spoil the effects.

### [Silica]

The anti-vibration rubber composition of the present invention contains silica having a nitrogen adsorption specific surface area (the BET method) in the range of 30 to 230 m²/g.

Silica, together with carbon black, functions as a reinforcing filler for an anti-vibration rubber composition, and can enhance the elastic modulus and the damping property.

With a BET specific surface area of silica of 230 m²/g or less, silica gel is easily dispersed in the rubber composition.

The amount of silica blended is not particularly limited as long as the amount is in a range that does not spoil the effects.

The blending ratio of carbon black (a) to silica (b), i.e. (a)/(b), is 10/90 to 45/55 on a mass basis, from the viewpoints of achieving both of the low dynamic magnification and the high durability and enhancing the processability. The ratio is preferably 10/90 to 30/70, more preferably 20/80 to 30/70.

The anti-vibration rubber composition of the present invention can comprise, together with the above-described components, agents blended for use in a common anti-vibration rubber composition. Examples include usually blended various compounding ingredients such as various fillers excluding carbon black and silica (e.g., clay and calcium carbonate), sulfur as vulcanizing agent, a vulcanization accelerator, a vulcanization accelerator aid, a softener such as various process oils, zinc oxide, stearic acid, a wax, and an antidegradant. From the viewpoint of suppressing reduction in the durability of the anti-vibration rubber, preferably the anti-vibration rubber composition comprises no aluminum hydroxide.

The softener is not especially limited and any of known oils can be used, and specifically, process oils such as an aromatic oil, a naphthenic oil and a paraffin oil, vegetable oils such as a coconut oil, synthetic oils such as an alkylbenzene oil, and a castor oil can be used. These can be used singly or in combinations of two or more.

The amount of oil blended is preferably 1 to 18 parts by mass, more preferably 2 to 15 parts by mass, relative to 100 parts by mass of the whole rubber.

In the present invention, from the viewpoint of accelerating the vulcanization, various vulcanization accelerator aids such as zinc oxide (ZnO) and a fatty acid can be blended.

The fatty acid may be any of saturated, unsaturated, straight chain and branched chain fatty acids, and the number of carbon atoms of the fatty acid is not especially limited. Examples thereof include fatty acids having 1 to 30 carbon atoms, preferably 15 to 30 carbon atoms, and more specifically cyclohexanoic acid (cyclohexane carboxylic acid), naphthenic acid such as alkyl cyclopentane having a side chain, hexanoic acid, octanoic acid, decanoic acid (including branched carboxylic acid such as neodecanoic acid), saturated fatty acids such as dodecanoic acid, tetradecanoic acid, hexadecanoic acid and octadecanoic acid (stearic acid), unsaturated fatty acids such as methacrylic acid, oleic acid, linoleic acid and linolenic acid, and resin acids such as rosin, tall oil acid and abietic acid. The vulcanization accelerator aids may be used singly or in combinations of two or more. In the present invention, zinc oxide and stearic acid can be suitably used.

The amount of the vulcanization accelerator aid blended is preferably 1 to 15 parts by mass, more preferably 2 to 10 parts by mass, relative to 100 parts by mass of the whole rubber.

The antidegradant is not especially limited and any of known agents can be used, and examples include phenol-based antidegradants, imidazole-based antidegradants and amine-based antidegradants. The amount of the antidegradant blended is typically 0.5 to 10 parts by mass, preferably 1 to 5 parts by mass, relative to 100 parts by mass of the whole rubber.

In obtaining the anti-vibration rubber composition of the present invention, a method for blending the aforementioned components is not especially limited, and all the components as raw materials may be blended at one time and kneaded, or the individual components may be blended in any of two or three steps and then kneaded. Moreover, in kneading the components, any of kneaders such as a roll, an internal mixer and a Banbury rotor can be used. Besides, if the resultant substance is to be molded into a shape of a sheet or a belt, any of known molding machines such as an extruder and a press may be used.

### <Anti-Vibration Rubber>

The anti-vibration rubber of the present invention is obtained by curing the anti-vibration rubber composition of the present invention having the above-described structure.

Vulcanizing conditions employed in curing the anti-vibration rubber composition are not especially limited, and conditions of 140 to 180°C and 5 to 120 minutes can be typically employed.

### Examples

### [Examples 1 to 25 and Comparative Examples 1 to 8]

The components for giving blending formulations shown in the following Table 1 were kneaded to obtain anti-vibration rubber compositions in Examples 1 to 25 and Comparative Examples 1 to 8, and the thus obtained anti-vibration rubber compositions were cured by vulcanization to obtain anti-vibration rubbers.

The vulcanization properties were evaluated from the vulcanization state of each of the anti-vibration rubber compositions, and the basic properties on hardness, tensile strength and tensile elongation, and the fatigue durability of the anti-vibration rubbers thus obtained were evaluated. Results are shown together in Tables 1 to 4.

### 1. Vulcanization Properties of Anti-Vibration Rubber Composition

Using a vibration-type vulcanization testing machine (curelastometer), the torque of an anti-vibration rubber composition at 155°C was measured to calculate the time (T10) required to reach 10% of the maximum torque and the time (T90) required to reach 90% of the maximum torque.

In Tables 1 to 4, on the basis of T10 and T90-T10 in Comparative Example 1, each of T10 and T90-T10 is shown by index relative to 100 for T10 and T90-T10 in Comparative Example 1. As the index value of T10 increases, the time with a small torque of the anti-vibration rubber composition becomes longer, so that excellent working stability can be obtained. However, if the index value of T10 is too large, the vulcanizing time becomes longer. In contrast, as the index value of T90-T10 decreases, the torque of the anti-vibration rubber composition increases in a shorter time, indicating a shortened vulcanizing time.

### 2. Basic Properties of Anti-Vibration Rubber

The hardness (Hs), tensile strength (Tb) and tensile elongation (Eb) of an anti-vibration rubber were measured in accordance with the following JIS standards for evaluation. Evaluation results are shown in Tables 1 to 4.
[Hardness (Hs)] .... in accordance with JIS K 6253 (type A)
[Tensile strength (Tb)] .... in accordance with JIS K 6251
[Tensile elongation (Eb)] .... in accordance with JIS K 6251

### 3. Fatigue Durability of Anti-Vibration Rubber

Anti-vibration rubbers in Examples and Comparative Examples were subjected to repeated 0 to 200% elongation at 85°C, and the number of repetitions until fracture was counted. In Table 1 to 4, indexes are shown on the basis of fracture count "100" in Comparative Example 1.

As the index value increases, the fatigue durability becomes better.

**Table 1**

| | | | Example | | | | | | | | |
|---|---|---|---|---|---|---|---|---|---|---|---|
| | | | 1 | 2 | 3 | 4 | 5 | 6 | 7 | 8 | 9 |
| Components | Natural Rubber | | 100 | 100 | 100 | 100 | 100 | 80 | 100 | 100 | 100 |
| Blended (parts by mass) | Polybutadiene Rubber | | | | | | | 20 | | | |
| | Coupling Agent 1 | | 2.50 | 2.20 | 2.00 | | 1.50 | 2.00 | 1.60 | 0.25 | 0.50 |
| | Coupling Agent 2 | | | | | 2.00 | | | | | |
| | Coupling Agent 3 | | | | | | | | 0.40 | | |
| | HAF Carbon Black | | 3.50 | 7.00 | 10.00 | 10.00 | 15.75 | 10.00 | 10.00 | 10.00 | 10.00 |
| | NiPSIL VN3 | | 31.50 | 28.00 | 25.00 | 25.00 | 19.25 | 25.00 | 25.00 | 25.00 | 25.00 |
| | Carbon Black/Silica Blending Mass Ratio (a/b) | | 0.11 | 0.25 | 0.40 | 0.40 | 0.82 | 0.40 | 0.40 | 0.40 | 0.40 |
| | Stearic Acid | | 2.00 | 2.00 | 2.00 | 2.00 | 2.00 | 2.00 | 2.00 | 2.00 | 2.00 |
| | Zinc Oxide | | 5.00 | 5.00 | 5.00 | 5.00 | 5.00 | 5.00 | 5.00 | 5.00 | 5.00 |
| | WAX | | 2.00 | 2.00 | 2.00 | 2.00 | 2.00 | 2.00 | 2.00 | 2.00 | 2.00 |
| | Antidegradant: RD | | 1.00 | 1.00 | 1.00 | 1.00 | 1.00 | 1.00 | 1.00 | 1.00 | 1.00 |
| | Antidegradant: 6PPD | | 1.00 | 1.00 | 1.00 | 1.00 | 1.00 | 1.00 | 1.00 | 1.00 | 1.00 |
| | Naphthene Oil | | 4.00 | 4.00 | 4.00 | 4.00 | 4.00 | 4.00 | 4.00 | 4.00 | 4.00 |
| | Sulfur | | 1.00 | 1.00 | 1.00 | 1.00 | 1.00 | 1.00 | 1.00 | 1.00 | 1.00 |
| | Vulcanization Accelerator: TBT | | 0.50 | 0.50 | 0.50 | 0.50 | 0.50 | 0.50 | 0.50 | 0.50 | 0.50 |
| | Vulcanization Accelerator: NS | | 1.00 | 1.00 | 1.00 | 1.00 | 1.00 | 1.00 | 1.00 | 1.00 | 1.00 |
| 1. Vulcanization Properties | Curelastometer (155°C) | T10 (INDEX) | 95 | 92 | 81 | 72 | 81 | 94 | 79 | 89 | 80 |
| | | T90-T10 (INDEX) | 21 | 20 | 14 | 12 | 16 | 15 | 32 | 9 | 11 |
| 2. Basic Properties | Hs (°) | | 57 | 56 | 57 | 59 | 57 | 58 | 59 | 53 | 54 |
| | Tb (MPa) | | 21.5 | 27.9 | 28.1 | 28.2 | 28.2 | 25.6 | 27.5 | 28.1 | 28.9 |
| | Eb (%) | | 470 | 530 | 570 | 560 | 510 | 580 | 510 | 640 | 660 |
| 3. Durability | Elongation Fatigue Durability (0 to 200% elongation, 85°C), Fracture Count (Index) | | 123 | 120 | 126 | 105 | 115 | 107 | 113 | 106 | 111 |

**Table 2**

| | | | Example | | | | | | | | |
|---|---|---|---|---|---|---|---|---|---|---|---|
| | | | 10 | 11 | 12 | 13 | 14 | 15 | 16 | 17 | 18 |
| Components | Natural Rubber | | 100 | 100 | 100 | 100 | 100 | 100 | 100 | 100 | 100 |
| Blended (parts by mass) | Coupling Agent 1 | | 1.25 | 2.25 | 2.00 | 2.00 | 2.00 | 2.00 | 2.00 | 2.00 | 2.50 |
| | HAF Carbon Black | | 10.00 | 10.00 | | | | | 10.00 | 10.00 | 10.00 |
| | ISAF Carbon Black | | | | 10.00 | | | | | | |
| | SAF Carbon Black | | | | | 10.00 | | | | | |
| | FEF Carbon Black | | | | | | 10.00 | | | | |
| | FT Carbon Black | | | | | | | 10.00 | | | |
| | NiPSIL VN3 | | 25.00 | 25.00 | 25.00 | 25.00 | 25.00 | 25.00 | | | 25.00 |
| | NiPSIL ER | | | | | | | | 25.00 | | |
| | NiPSIL E75 | | | | | | | | | 25.00 | |
| | Carbon Black/Silica Blending Mass Ratio (a/b) | | 0.40 | 0.40 | 0.40 | 0.40 | 0.40 | 0.40 | 0.40 | 0.40 | 0.40 |
| | Stearic Acid | | 2.00 | 2.00 | 2.00 | 2.00 | 2.00 | 2.00 | 2.00 | 2.00 | 2.00 |
| | Zinc Oxide | | 5.00 | 5.00 | 5.00 | 5.00 | 5.00 | 5.00 | 5.00 | 5.00 | 5.00 |
| | WAX | | 2.00 | 2.00 | 2.00 | 2.00 | 2.00 | 2.00 | 2.00 | 2.00 | 2.00 |
| | Antidegradant: RD | | 1.00 | 1.00 | 1.00 | 1.00 | 1.00 | 1.00 | 1.00 | 1.00 | 1.00 |
| | Antidegradant: 6PPD | | 1.00 | 1.00 | 1.00 | 1.00 | 1.00 | 1.00 | 1.00 | 1.00 | 1.00 |
| | Naphthene Oil | | 4.00 | 4.00 | 4.00 | 4.00 | 4.00 | 4.00 | 4.00 | 4.00 | 4.00 |
| | Sulfur | | 1.00 | 1.00 | 1.00 | 1.00 | 1.00 | 1.00 | 1.00 | 1.00 | 1.00 |
| | Vulcanization Accelerator: TBT | | 0.5 | 0.5 | 0.5 | 0.5 | 0.5 | 0.5 | 0.5 | 0.5 | 0.5 |
| | Vulcanization Accelerator: NS | | 1.0 | 1.0 | 1.0 | 1.0 | 1.0 | 1.0 | 1.0 | 1.0 | 1.0 |
| 1. Vulcanization Properties | Curelastometer (155°C) | T10 (INDEX) | 85 | 83 | 80 | 79 | 83 | 81 | 80 | 79 | 85 |
| | | T90-T10 (INDEX) | 13 | 13 | 11 | 15 | 13 | 18 | 12 | 16 | 13 |
| 2. Basic Properties | Hs (°) | | 56 | 57 | 58 | 59 | 55 | 55 | 59 | 58 | 56 |
| | Tb (MPa) | | 29.7 | 25.4 | 28.0 | 27.5 | 27.2 | 27.1 | 25.8 | 25.1 | 25.8 |
| | Eb (%) | | 650 | 590 | 580 | 540 | 550 | 540 | 530 | 520 | 540 |
| 3. Durability | Elongation Fatigue Durability (0 to 200% elongation, 85°C), Fracture Count (Index) | | 125 | 119 | 118 | 103 | 125 | 195 | 117 | 120 | 95 |

**Table 3**

| | | | Example | | | | | | |
|---|---|---|---|---|---|---|---|---|---|
| | | | 19 | 20 | 21 | 22 | 23 | 24 | 25 |
| Components | Natural Rubber | | 55 | 40 | 40 | 100 | 100 | 100 | 100 |
| Blended (parts by mass) | Polybutadiene Rubber | | 45 | 60 | | | | | |
| | SBR | | | | 60 | | | | |
| | Coupling Agent 1 | | 2.00 | 2.00 | 2.00 | 2.00 | 2.00 | 2.00 | 2.00 |
| | HAF Carbon Black | | 10.00 | 10.00 | 10.00 | 10.00 | 10.00 | 10.00 | 10.00 |
| | NiPSIL VN3 | | 25.00 | 25.00 | 25.00 | 25.00 | 25.00 | 25.00 | 25.00 |
| | Carbon Black/Silica Blending Mass Ratio (a/b) | | 0.40 | 0.40 | 0.40 | 0.40 | 0.40 | 0.40 | 0.40 |
| | Stearic Acid | | 2.00 | 2.00 | 2.00 | 2.00 | 2.00 | 2.00 | 2.00 |
| | Zinc Oxide | | 5.00 | 5.00 | 5.00 | 5.00 | 5.00 | 5.00 | 5.00 |
| | WAX | | 2.00 | 2.00 | 2.00 | 2.00 | 2.00 | 2.00 | 2.00 |
| | Antidegradant: RD | | 1.00 | 1.00 | 1.00 | 1.00 | 1.00 | 1.00 | 1.00 |
| | Antidegradant: 6PPD | | 1.00 | 1.00 | 1.00 | 1.00 | 1.00 | 1.00 | 1.00 |
| | Naphthene Oil | | 4.00 | 4.00 | 4.00 | 8.00 | 15.00 | 18.00 | 22.00 |
| | Sulfur | | 1.00 | 1.00 | 1.00 | 1.00 | 1.00 | 1.00 | 1.00 |
| | Vulcanization Accelerator: TBT | | 0.50 | 0.50 | 0.50 | 0.50 | 0.50 | 0.50 | 0.50 |
| | Vulcanization Accelerator: NS | | 1.00 | 1.00 | 1.00 | 1.00 | 1.00 | 1.00 | 1.00 |
| 1. Vulcanization Properties | Curelastometer (155°C) | T10 (INDEX) | 99 | 91 | 102 | 85 | 92 | 95 | 98 |
| | | T90-T10 (INDEX) | 14 | 14 | 28 | 16 | 18 | 18 | 20 |
| 2. Basic Properties | Hs (°) | | 58 | 59 | 58 | 55 | 51 | 50 | 46 |
| | Tb (MPa) | | 22.5 | 19.5 | 22.4 | 27.4 | 24.3 | 23.3 | 20.4 |
| | Eb (%) | | 550 | 520 | 540 | 610 | 650 | 660 | 680 |
| 3. Durability | Elongation Fatigue Durability (0 to 200% elongation, 85°C), Fracture Count (Index) | | 106 | 98 | 99 | 128 | 109 | 105 | 99 |

**Table 4**

| | | | Comparative Example | | | | | | | |
|---|---|---|---|---|---|---|---|---|---|---|
| | | | 1 | 2 | 3 | 4 | 5 | 6 | 7 | 8 |
| Components | Natural Rubber | | 100 | 100 | 100 | 100 | 100 | 100 | 100 | 100 |
| Blended (parts by mass) | Coupling Agent 1 | | | | | 2.80 | 1.30 | 0.60 | 0.30 | |
| | Coupling Agent 3 | | 2.00 | | | | | | | |
| | Coupling Agent 4 | | | 2.00 | | | | | | |
| | HAF Carbon Black | | 10.00 | 10.00 | 10.00 | | 19.25 | 28.00 | 31.50 | 35.00 |
| | NiPSIL VN3 | | 25.00 | 25.00 | 25.00 | 35.00 | 15.75 | 7.00 | 3.50 | |
| | Carbon Black/Silica Blending Mass Ratio (a/b) | | 0.40 | 0.40 | 0.40 | 0/35 | 1.22 | 4.00 | 9.00 | 35/0 |
| | Stearic Acid | | 2.00 | 2.00 | 2.00 | 2.00 | 2.00 | 2.00 | 2.00 | 2.00 |
| | Zinc Oxide | | 5.00 | 5.00 | 5.00 | 5.00 | 5.00 | 5.00 | 5.00 | 5.00 |
| | WAX | | 2.00 | 2.00 | 2.00 | 2.00 | 2.00 | 2.00 | 2.00 | 2.00 |
| | Antidegradant: RD | | 1.00 | 1.00 | 1.00 | 1.00 | 1.00 | 1.00 | 1.00 | 1.00 |
| | Antidegradant: 6PPD | | 1.00 | 1.00 | 1.00 | 1.00 | 1.00 | 1.00 | 1.00 | 1.00 |
| | Naphthene Oil | | 4.00 | 4.00 | 4.00 | 4.00 | 4.00 | 4.00 | 4.00 | 4.00 |
| | Sulfur | | 1.00 | 1.00 | 1.00 | 1.00 | 1.00 | 1.00 | 1.00 | 1.00 |
| | Vulcanization Accelerator: TBT | | 0.50 | 0.50 | 0.50 | 0.50 | 0.50 | 0.50 | 0.50 | 0.50 |
| | Vulcanization Accelerator: NS | | 1.00 | 1.00 | 1.00 | 1.00 | 1.00 | 1.00 | 1.00 | 1.00 |
| 1. Vulcanization Properties | Curelastometer (155°C) | T10 (INDEX) | 100 | 59 | 82 | 116 | 68 | 55 | 50 | 46 |
| | | T90-T10 (INDEX) | 100 | 61 | 8 | 16 | 15 | 11 | 9 | 8 |
| 2. Basic Properties | Hs (°) | | 58 | 58 | 55 | 55 | 57 | 58 | 57 | 58 |
| | Tb (MPa) | | 26.7 | 27.7 | 28.4 | 25.9 | 28.4 | 27.9 | 27.5 | 27.6 |
| | Eb (%) | | 510 | 540 | 690 | 550 | 510 | 540 | 560 | 530 |
| 3. Durability | Elongation Fatigue Durability (0 to 200% elongation, 85°C), Fracture Count (Index) | | 100 | 81 | 90 | 119 | 101 | 100 | 83 | 63 |

The details of the respective components shown in Tables 1 to 4 are as follows:
1) Rubber component
   - Natural rubber (NR): "RSS#1"
   - Polybutadiene rubber: "BR01" manufactured by JSR Corporation • SBR (styrene-butadiene rubber): "SBR1500" manufactured by JSR Corporation
2) Silane coupling agent
   - Silane coupling agent 1
      "NXT-Z45" manufactured by Momentive Performance Materials Inc. i.e., a silane coupling agent having a structural unit represented by general formula (1) and a structural unit represented by general formula (2). In general formulas (1) and (2), R¹ is a linear saturated aliphatic hydrocarbon group having 7 carbon atoms, L¹ and L² are a divalent linear saturated aliphatic hydrocarbon group having 3 carbon atoms, and the following is satisfied: x/y=55/45 (molar ratio).
   - Silane coupling agent 2
      "NXT-Z100" manufactured by Momentive Performance Materials Inc. i.e., a silane coupling agent having no structural unit represented by general formula (1) and a structural unit represented by general formula (2). In general formula (2), L² is a divalent linear saturated aliphatic hydrocarbon group having 3 carbon atoms.
   - Silane coupling agent 3
      Bis(3-triethoxysilylpropyl)tetrasulfide (TESPT) manufactured by Evonik Degussa Japan Co., Ltd.
   - Silane coupling agent 4
      "A-1891" manufactured by Momentive Performance Materials Inc. i.e., (3-mercaptopropyl)triethoxysilane
3) Carbon black
   - HAF: manufactured by Asahi Carbon Co., Ltd., trade name: "#70" (iodine adsorption number: 82 g/kg, DBP adsorption number: 102 ml/100 g)
   - ISAF: manufactured by Asahi Carbon Co., Ltd., trade name: "#80" (iodine adsorption number: 121 g/kg, DBP adsorption number: 114 ml/100 g)
   - SAF: manufactured by Asahi Carbon Co., Ltd., trade name: "#110" g) (iodine adsorption number: 145 g/kg, DBP adsorption number: 113 ml/100
   - FEF: manufactured by Asahi Carbon Co., Ltd., trade name: "#65" (iodine adsorption number: 43 g/kg, DBP adsorption number: 121 ml/100 g)
   - FT: manufactured by Asahi Carbon Co., Ltd., trade name: "#15" (iodine adsorption number: 11 g/kg, DBP adsorption number: 41 ml/100 g)
4) Silica
   - Precipitated silica "NIPSIL VN3" manufactured by Tosoh Silica Corporation [nitrogen adsorption specific surface area (the BET method): 180 to 230 m²/g]
   - Precipitated silica "NIPSIL ER" manufactured by Tosoh Silica Corporation [nitrogen adsorption specific surface area (the BET method): 70 to 120 m²/g]
   - Precipitated silica "NIPSIL E75" manufactured by Tosoh Silica Corporation [nitrogen adsorption specific surface area (the BET method): 30 to 60 m²/g]
5) Wax
   "ANTILUX 654" manufactured by Rhein Chemie Corp.
6) Antidegradant
   - RD: 2,2,4-trimethyl-1,2-dihydroquinoline polymer, "NOCRAC 224" manufactured by Ouchi Shinko Chemical Industrial Co., Ltd.
   - 6PPD: N-phenyl-N'-(1,3-dimethylbutyl)-p-phenylenediamine, "NOCRAC 6C" manufactured by Ouchi Shinko Chemical Industrial Co., Ltd.
7) Naphthene oil
   "DIANA PROCESS OIL NS-100" manufactured by Idemitsu Kosan Co., Ltd.
8) Vulcanization accelerator
   - TBT: "ACCEL TBT" manufactured by Kawaguchi Chemical Industry Co., Ltd.
   - NS: "NOCCELER NS-F" manufactured by Ouchi Shinko Chemical Industrial Co., Ltd.

As clearly shown in Tables 1 to 4, the anti-vibration rubber compositions in Examples had index values of T10 of close to 100, allowing work stability to be maintained, and had small index values of T90-T10, allowing the vulcanizing time to be shortened, in parallel. It was also found that the obtained anti-vibration rubbers had index values of fatigue durability of close to 100, i.e., equivalent to the conventional performance, or had index values of larger than 100, i.e., better than the conventional performance.

Moreover, although the anti-vibration rubber composition in Comparative Example 4 had a smaller index value of T90-T10, a larger index value of the fracture count of the obtained anti-vibration rubber, and a larger index value of T10, than the anti-vibration rubber composition in Comparative Example 1, the index value of T10 is much larger than 100 (equal to or larger than 115), so that a prolonged vulcanizing time is shown.

### Industrial Applicability

The composition of the present invention is suitably used for various anti-vibration rubber components, and the composition of the present invention may be used in combination with metal components, resin components and the like. More specifically, the composition is suitably used for an engine mount, a strut mount, a member mount, a suspension bush, a toe correct bush, a lower arm bush, a differential mount, a muffler hanger, a spring sheet, a dynamic damper, a viscous rubber damper, and a center support rubber of various automobiles.

## Claims

1. An anti-vibration rubber composition comprising:
a diene rubber;
a silane coupling agent having at least one of a structural unit represented by the following general formula (1) and a structural unit represented by the following general formula (2),
carbon black, and
silica, at a blending ratio of the carbon black (a) to the silica (b), i.e. (a)/(b), of 10/90 to 45/55 (mass ratio): 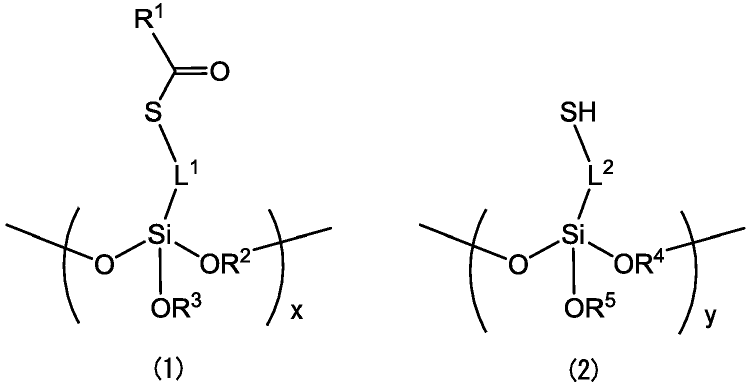
wherein R¹ represents a hydrocarbon group having 1 to 12 carbon atoms, L¹ and L² each independently represent a divalent hydrocarbon group having 1 to 5 carbon atoms, R² and R⁴ each independently represent a divalent hydrocarbon group having 1 to 5 carbon atoms, R³ and R⁵ each independently represent a hydrocarbon group having 1 to 5 carbon atoms, and x and y each independently represent an integer of 1 or more.

2. The anti-vibration rubber composition according to claim 1, wherein the carbon black is at least one selected from the group consisting of SRF, GPF, FEF, HAF, ISAF, SAF, FT and MT.

3. The anti-vibration rubber composition according to claim 1 or 2, wherein the diene rubber comprises a natural rubber alone.

4. The anti-vibration rubber composition according to claim 1 or 2, wherein the diene rubber comprises a natural rubber and a butadiene rubber in combination.

5. An anti-vibration rubber made by curing the anti-vibration rubber composition according to any one of claims 1 to 4.
